# EUROPEAN PATENT APPLICATION

(11) **EP 1 990 319 A2**
(43) Date of publication of application: **12.11.2008**
(21) Application number: 08010866.5
(22) Date of filing: 06.07.2004
(51) Int. Cl.: C02F 5/00

(54) **Water-softening method**

(30) Priority: 07.07.2003 GB 0315842
(62) Divisional of application: 04743244.8
(71) Applicant: Reckitt Benckiser N.V., 2132 WT Hoofddorp (NL)
(72) Inventor: Corradini, Fabio, Mira VE 30034 (IT); Kosub, Mike, 76646 Bruchsal (DE)
(74) Representative: Bowers, Craig Malcolm

(57) **Abstract**

This invention relates to a method of water-softening using a water-softening product and products useful in such methods. The invention describes such products and processes wherein a change to the product occurs during the washing process. The product is a sachet.

## Description

This invention relates to a method of water-softening using a water-softening product and products useful in such methods. The invention describes such products and processes wherein a change to the product occurs during the washing process.

It is well known that certain metal compounds, notably calcium compounds, have a significant effect on the properties of water. "Hard" water containing a significant loading of soluble calcium and magnesium compounds form a scum with soap or detergent and may require a larger amount of detergent in order to provide an efficient clean. Scale deposits can readily form from such water, for example on heating or pH change or evaporation. These deposits can be encrustations, or watermarks left on evaporation of water droplets from, especially, a shiny surface. In addition hard water can form encrustations on fabric washed using such water giving a harsh feel to the fabric.

There have been many proposals for the removal of metal ions from aqueous solutions. In the industrial context proposals have included filter beds and polymeric filters for capturing heavy metal ions from an aqueous solution flowing within a passageway. Examples are given in EP-A-992238 and GB-A-20869564. In the domestic context sequestrants can be added to an aqueous washing solution and these can capture metal ions, such as calcium ions. Examples of such sequestrants are given in EP-A-892040.

However, many consumers are sceptical as to the benefits derived from the use of water-softening products since the benefits are not immediately obvious after a single use of the product, the benefits tend to accumulate over time, for example preventing encrustation of heating elements or encrustation onto the fabric. Typically the water-softening product is consumed during the process or is washed away, such as in the use of powder, tablets or liquid products.

In a multi-step washing process, such as that carried out by a clothes washing machine, it can be a problem that the water-softening product is discharged with the waste water, at an intermediate stage of the process, and is not available for later stages.

There is a need for a product which will soften water, for example by binding metal ions present in water, at least calcium ions and preferably also other metal ions, in a convenient manner, preferably through the entire course of a procedure (for example a washing process) and preferably provide some sort of visible cue to the consumer that the product has worked.

WO0218533 and WO0218280 describe water-softening products that are not consumed during washing processes, because they are not water-soluble, and which are too large to be washed away during any rinsing step. However, these products (active water insoluble sheets or water insoluble pouches) provide not cue to the consumer that they have provided any benefit.

WO 02098798 describes a water softening system for cleaning cars. The system attaches to the end of a hose and can include a colour indicator to show when the water softening resin is depleted. The colour change system utilises pH indicators bound into the resin that change colour when the resin has been used up.

WO 02084278 describes a consumer product that can indicate the pH of the water in which it is placed.

In accordance with a first aspect of the present invention there is provided a method of softening water in a ware washing machine, wherein hard water is contacted with a water-insoluble product added to the ware washing machine, the product containing a water-softening agent able to bind calcium ions, characterised in that the product has a different appearance before being contacted with the hard water than after the product is contacted with the hard water.

Alternatively provided is a water-insoluble softening product containing a water-softening agent able to bind calcium ions, characterised in that the product has a different appearance after being contacted with the hard water than before the product is contacted with the hard water.

Preferably the water-softening agent is substantially water-insoluble. In addition the substantially water-insoluble water-softening agent is retained in the product, ideally by enclosing walls (such as by having a porosity smaller than the average particle size of the water insoluble water-softening agent), the walls being permeable to the water and to components dissolved therein.

Ideally the change is a gross change to the product. A gross change is one which is manifestly evident to the user and which remains visible even after the product is dry to the touch.

Suitable gross changes in the appearance of the product that may be perceived by the user of the product are selected from an increase or decrease in any one or more of the following properties selected from; size, shape, colour, opacity, surface texture and flexibility.

By substantially water-insoluble water-softening agent we mean an agent, more than 50% wt, preferably at least 70% wt, more preferably at least 85% wt and most preferably at least 95% wt, and optimally 100% wt, of which is retained in the product, when the product is used under the conditions for which it is intended (i.e. 51 of water is at a temperature of 60°C) and the product is immersed for 20 minutes with rapid agitation.

The method of softening water is a method used in a ware washing machine, for example a clothes washing machine or a dishwashing machine. Preferably the product is able to work trough the wash and the rinse cycle of the machine; or only in the rinse cycle, or just in the washing cycle.

Alternatively we present a method of providing improved cleaning in a clothes washing machine, wherein a water insoluble product containing a water softening agent, is located in the machine such that inflowing hard water flows through the product, thereby effecting the softening of the water in the machine characterised in that the product has a different appearance before being contacted with the hard water than after the product is contacted with the hard water.

A product may be disposed in a clothes washing machine throughout the wash and rinse cycles, for example by being placed in the machine's drum with laundry to be washed. Alternatively a product may be disposed in the rinse and/or the wash portion of the dispensing drawer of a clothes washing machine, such that rinse and/or wash water flowing through the dispensing drawer and into the machine is rendered lower in calcium ion concentration.

### Water-insoluble Water Softening Agent

A water-insoluble water softening agent could comprise polymeric bodies. Suitable forms include beads and fibres. Examples include polyacrylic acid and algins. The water-insoluble agent could alternatively be an inorganic material, for example a granular silicate or zeolite which is retained by the product walls.

Preferred amounts present inside each product are 5 to 50g. Ideally as a weight % of the composition in the product the water-insoluble water softening agent is >7.5% wt, >10% wt, >15%, >20% wt, >30% wt, 40% wt. Maximum amounts are <95% wt or < 85% wt.

The polymeric bodies may, if not inherently sequestrant, be processed in any of a number of ways. Sequestrant side chains may be grafted onto the bodies, for example using the well-known techniques of radiation grafting or chemical grafting. Radiation grafting is described in WO 94/12545. Chemical grafting is described in GB 2086954A. Alternatively for certain side chains the polymeric bodies may be fabricated (for example melt spun) already bearing the sequestrant side-chains, as described in EP 486934A. In yet other embodiments polymeric bodies not bearing sequestrant side chains may be coated with material which has the side chains. The polymeric bodies may, in effect, be regarded as carrying the side chains by mechanical adhesion. Alternatively they may attach by cross-linking, as described in EP 992283A.

Preferably sequestrant side chains are any side-chains which can be carried by polymeric bodies, and which are able to bind calcium (and preferably other) ions, and whose effectiveness in doing that is not substantially diminished by a cleaning agent. Suitable calcium-binding side-chains include residues of acids, for example of acrylic or methacrylic acid, or carboxylic acids, or of sulphonic acids, or of phosphonic acids. Residues of organic acids are preferred. Particularly preferred are residues of methacrylic or, especially, acrylic acid.

Alternative calcium-binding side chains of polymeric bodies may include amino groups, quaternary ammonium salt groups and iminodicarboxyl groups -N{(CH₂)ₙCOOH}₂, where n is 1 or 2.

Further suitable calcium-binding side chains of polymeric bodies may include acyl groups as described in EP 984095A. These have the formula

-C (O) - X (V) (Z) (M) or -C (O) - X (V) (Z) (S-M')

where X represents a residue in which one carboxyl group is eliminated from a monocarboxylic acid or dicarboxylic acid;
V represents hydrogen or a carboxyl group;
M represents hydrogen; or 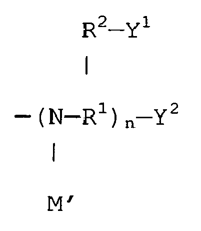 wherein R¹ represents a residue in which one hydrogen is eliminated from a carbon chain in an alkylene group, R² represents a direct bond or an alkylene group, Y¹ and Y² are the same or different and each represents hydrogen, a carboxyl group, an amino group, a hydroxy group or a thiol group, n is an integer of 1 to 4, M' represents hydrogen or 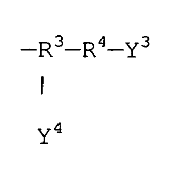 wherein R³ represents a residue in which one hydrogen is eliminated from a carbon chain in an alkylene group; R⁴ represents a direct bond or an alkylene group, Y³ and Y⁴ are the same or different and each represents hydrogen, a carboxyl group, an amino group, a hydroxy group or a thiol group; and Z represents hydrogen or has the same meaning as that of M.

Such side chains are preferably carried by polymeric fibres selected from polyolefins, poly(haloolefins), poly(vinylalcohol), polyesters, polyamides, polyacrylics, protein fibres and cellulosic fibres (for example cotton, viscose and rayon). Polyolefins are especially preferred, particularly polyethylene and polypropylene.

When side chains are grafted onto the base polymeric bodies a preferred process is one using irradiation, in an inert atmosphere, with immediate delivery to irradiated bodies of acrylic acid. Preferably the radiation is electron beam or gamma radiation, to a total dose of 10-300 kGy, preferably 20-100 kGy. The acrylic acid is preferably of concentration 20-80 vol %, in water, and the temperature at which the acrylic acid is supplied to the irradiated polymeric bodies is preferably an elevated temperature, for example 30-80°C. Preferably the base polymeric bodies are polyethylene, polypropylene or cellulosic fibres.

In a preferred feature the water-insoluble agent comprises cation exchange resin. Cation exchange resins may comprise strongly and/or weakly acidic cation exchange resin. Further, resins may comprise gel-type and/or macroreticular (otherwise known as macroporous)-type acidic cation exchange resin. The exchangeable cations of strongly acidic cation exchange resins are preferably alkali and/or alkaline earth metal cations, and the exchangeable cations of weakly acidic cation exchange resins are preferably H⁺ and/or alkali metal cations. Suitable strongly acidic cation exchange resins include styrene/divinyl benzene cation exchange resins, for example, styrene/divinyl benzene resins having sulfonic functionality and being in the Na⁺ form such as Amberlite 200, Amberlite 252 and Duolite C26, which are macroreticular-type resins, and Amberlite IR-120, Amberlite IR-122, Amberlite IR-132, Duolite C20 and Duolite C206, which are gel-type resins. Suitable weakly acidic cation exchange resins include acrylic cation exchange resins, for example, Amberlite XE-501, which is a macroreticular-type acrylic cation exchange resin having carboxylic functionality and being in the H⁺ form, and Amberlite DP1 which is a macroreticular-type methacrylic/divinyl benzene resin having carboxylic functionality and being in the Na⁺ form.

Other forms of water insoluble ion exchange agents can be used - such agents include alkali metal (preferably sodium) aluminosilicates either crystalline, amorphous or a mixture of the two. Such aluminosilicates generally have a calcium ion exchange capacity of at least 50 mg CaO per gram of aluminosilicate, comply with a general formula:

0.8-1.5 Na₂O . Al₂O₃. 0.8-6 SiO₂

and incorporate some water. Preferred sodium aluminosilicates within the above formula contain 1.5-3.0 SiO₂ units. Both amorphous and crystalline aluminosilicates can be prepared by reaction between sodium silicate and sodium aluminate, as amply described in the literature.

Suitable crystalline sodium aluminosilicate ionexchange detergency builders are described, for example, in GB 1429143 (Procter & Gamble). The preferred sodium aluminosilicates of this type are the well known commercially available zeolites A and X, and mixtures thereof. Also of interest is zeolite P described in EP 384070 (Unilever).

Another class of compounds are the layered sodium silicate builders, such as are disclosed in US-A-4464839 and US-A-4820439 and also referred to in EP-A-551375.

These materials are defined in US-A-4820439 as being crystalline layered, sodium silicate of the general formula

NaMSiₓO₂ₓ₊₁. YH₂O

where
M denotes sodium or hydrogen,
x is from 1.9 to 4 and y is from 0 to 20.

Quoted literature references describing the preparation of such materials include Glastechn. Ber. 37,194-200 (1964), Zeitschrift für Kristallogr. 129, 396-404 (1969), Bull. Soc. Franc. Min. Crist., 95, 371-382 (1972) and Amer. Mineral, 62, 763-771 (1977). These materials also function to remove calcium and magnesium ions from water, also covered are salts of zinc which have also been shown to be effective water softening agents.

In principle, however, any type of insoluble, calcium-binding material can be used.

Preferably the calcium-binding modifying agent is also able to bind magnesium ions.

Preferably the product also includes water-soluble water softening agents that are capable of being washed away from the product. By the term "water-soluble" we include agents that are water dispensible. Such agents include
1) Ion capture agents - agents which prevent metal ions from forming insoluble salts or reacting with surfactants, such as polyphosphate, monomeric polycarbonates, such as citric acid or salts thereof.
2) Anti-nucleating agents - agents which prevent seed crystal growth, such as polycarbonate polymers, such as polyacrylates, acrylic/maleic copolymers, phosphonates, and acrylic phosphonates and sulfonates.

### Indicator

As described above a number of different methods may be used to indicate to the consumer that the product has worked.

### Shape and/or Size

Preferably the enclosing wall or part of the enclosing wall is made from a flexible material.

The inclusion in a flexible product of water absorbent gelling material, absorbent particles, superabsorbent particles, absorbent fibres and superabsorbent fibres will lead to a change in the shape and/or size of the product. The absorbent material can be either a single absorbent material or a blend of absorbent materials, comprising material that is capable of turning into a gel upon being wetted, and thus retaining large amounts of liquids with respect to its own original volume. Preferred materials in this respect are so-called superabsorbent polymers or SAP, in the form of particles, powders or fibres, however, according to the invention other known absorbent materials can be used, both in powder and fibre form. A variety of such materials are known to the art.

It will be appreciated that the use of such absorbent materials may also change the flexibility of the product after use.

### Colour

A dye could be employed that is retained in the product to give a colour change, such as crystal violet.

Alternatively a dye sensitive to the presence or absence of calcium, and or magnesium ions, is present in and retained by the product. Suitable calcium indicators are selected from metalphthalein, 3,4-dihydroxy-9,10-diazo-2-anthracene sulfonic acid (Alizarin Red S), ammonium purpurate, 1-(1-hydroxy-2-naphthylazo)-5-nitro-2-naphthol-4-sulfonic acid (Eriochrome Black T) and 1-(1-hydroxy-4-methyl-2-phenylazo)-2-napthol-4-sulfonic acid (Calmagite).

Preferably any dye is ionically bound inside the product, either to the enclosing wall or the water-insoluble agent. Methods of ionically binding dyes are disclosed in W002084278. Alternatively dye may be entrapped in some way into the product, i.e. within the water porous enclosing walls of the product.

### Opacity and/or transparency

Changes may be designed to occur with the visual properties of the product such that it appear to be more or less translucent or transparent. Changes may be effected through the use of agents that dissolve during the use of the product, for example pore occluding elements.

### Surface Texture

Water-soluble coatings on the product may be used to modify the "before" and "after" texture of the product.

### Flexibility

As described above the enclosing wall, or part of the enclosing wall, is made from a flexible material. The flexibility of the wall, or part thereof, or the contents of the product may be changed through use of the product in a method of the invention, in particular after contact with water. Suitable changes can be achieved by the use of water-soluble (or water dispersible) binders present in the enclosing wall or inside the product. Preferably a binder is used to form the contents of the product into the form of a cake inside the product. After use the cake is broken up to have either an empty product (in the event that the contents are free to escape the product during use) or as a loose sachet of powder (in the event that the contents are not free to escape the product during use).

The method of the invention is suitably carried out at a temperature in the range 5 to 100°C, especially 10 to 60°C, most preferably 20 to 60°C.

Preferably the product is able to move freely within the water used in the method. Preferably the product is immersed in the water substantially throughout the method. Thus, it is preferably not in the form of a filter or like body, retained in a fixed orientation, or mounted on a frame (except in the third aspect of the invention, defined hereinafter).

In the method of the invention the product could be a rigid or flexible body with porous openings present throughout its enclosing wall (which term we use to denote a product with one or several facets). It may be spherical or ovoid or cubic or cuboid, or any other convenient shape. It could comprise a microporous openings throughout its wall, but having one or more windows set into its wall.

### Manufacture

Preferably the product is formed into a flat container or a sachet from a bag or sandwich of sheets, having at least one perforated outer wall, for example of a woven, knitted or preferably non-woven material, of textile or paper. The material is in the form of single layer or laminated sheets. Preferably the wall comprises a sheet with a ply of one, two or three layers, such that any insoluble modifying agent inside the bag is too large to pass through the perforation(s) or must follow a tortuous pathway if it were to exit the bag through the wall.

The wall of a bag may conveniently consist of one or two sheets sealed together about their periphery, with the agent inside. The agent could comprise a further sheet or sheets. The seal may be by means of adhesive or dielectric welding or, preferably, heat sealing or, most preferably, ultrasound sealing or a combination thereof. When the seal is by heat sealing the sheets may comprise a thermoplastic to facilitate this. The material forming the adhesive strips can be a so called hot melt comprising various materials, such as APP, SBS, SEBS, SIS, EVA and the like, or a cold glue, such as a dispersion of various materials, e.g. SBS, natural rubber and the like, or even a solvent-based or a two-component adhesive system. Furthermore, the material may be capable of crosslinking to form specific, permanent chemical bonds with the various layers. The amount of adhesive is a function of the type of adhesive used, however it is generally between 0.2 and 20 g/m².

Conventional materials used in tea bag manufacture or in the manufacture of sanitary or diaper products may be suitable, and the techniques used in making tea bags or sanitary products can be applied to make flexible products useful in this invention. Such techniques are described in WO 98/36128 and EP 380127A.

The product could be discarded after use, or it could be regenerated, for example using sodium chloride to effect ion exchange, and re-used.

In addition to a substantially insoluble modifying agent the product could contain a soluble solid material or a dispersible solid material which can pass through the walls of the bag when immersed in water. Such a soluble or dispersible solid material could be, for example, any of the materials mentioned above as being possible components of compositions with which the product can be used; but particularly includes a cleaning surfactant.

Furthermore the wall of the product may itself be water-insoluble or may act as a further means for modifying the water, for example by having the capability of capturing undesired species in the water and/or releasing beneficial species. Thus, the wall material could be of a textile material with ion-capturing and/or ion-releasing properties, for example as described above.

In accordance with a further aspect of the invention there is provided a product having an enclosing wall and containing a substantially water-insoluble water softening agent, and a water-soluble water softening agent, the wall being permeable to water and to the water-soluble water softening agent dissolved therein but impermeable to the substantially water-insoluble modifying agent characterised in that the product has a different appearance before being contacted with the hard water than after the product is contacted with the hard water.

The product may be a rigid body which is shaped to locate snugly in the tray such that the inflowing rinse water is compelled to flow through it. Alternatively it may be a flexible body, for example a bag, which packs into the flow pathway for the rinse water such that the rinse water is compelled to flow through it. This is an efficient approach to softening the water used in clothes washing machines. Suitably the main wash water will not have flowed through the product, but softening thereof is effected by the conventional builders present in the laundry detergent composition. Prior to rinsing, the wash water containing the builders is drained away and only then is the rinse water delivered into the machine, this rinse water having been softened by flowing through the product located in the loading tray. Neither the builders nor the sequestrant in the product are active at the same time as the other. Thus, they do not compete with each other and are not used wastefully.

In accordance with a further aspect of the invention there is provided a method of providing improved cleaning in a clothes washing machine, wherein a water insoluble product containing a water softening agent is located in the machine such that hard water flows through the product, thereby effecting the softening of the water in the machine characterised in that the product has a different appearance before being contacted with the hard water than after the product is contacted with the hard water.

The invention will now be described, by way of example, with reference to the following embodiments.

| **Actives in Sachet** | **Amt** | **Wt.%** | **Amt** | **Wt.%** | **Amt** | **Wt.%** | **Amt** | **Wt.%** | **Amt** | **Wt.%** | **Amt** | **Wt.%** |
|---|---|---|---|---|---|---|---|---|---|---|---|---|
| Acusol WE | 5.00 | 42.7 | 6.00 | 56.1 | 3.84 | 29.0 | 4.80 | 28.6 | 5.00 | 39.3 | 4.00 | 34.8 |
| Citric Acid | 2.85 | 24.4 | 3.00 | 28.0 | 5.43 | 41.0 | 6.79 | 40.4 | 2.85 | 22.4 | 2.50 | 21.7 |
| HEDP | 0.10 | 0.9 | 0.15 | 1.4 | 0.10 | 0.8 | 0.10 | 0.6 | 0.10 | 0.8 | 0.10 | 0.9 |
| Cation Exchange Resin | 3.00 | 25.6 | 1.10 | 10.3 | 3.00 | 22.6 | 4.00 | 23.8 | 4.00 | 31.4 | 4.00 | 34.8 |
| Super absorbent polymer | 0.25 | 2.1 | 0.25 | 2.3 | 0.80 | 6.0 | 0.90 | 5.4 | 0.70 | 5.5 | 0.70 | 6.1 |
| Esterquat | 0.50 | 4.3 | 0.20 | 1.9 | 0.09 | 0.68 | 0.20 | 1.2 | 0.085 | 0.67 | 0.20 | 1.7 |
| **Total (grams)** | 11.7 | | 10.7 | | 13.26 | | 16.79 | | 12.74 | | 11.5 | |

The sachet was made from Polypropylene nonwoven sheets Leutrasil^{™} available from Freudenberg Nonwovens.

## Claims

1. A method of softening water in a ware washing machine, wherein hard water is contacted with a water insoluble product added to the ware washing machine, the product containing a water-softening agent able to bind calcium ions, **characterised in that** the product has a different appearance after being contacted with the hard water than before the product is contacted with the hard water, wherein the product is a sachet.

2. A method as claimed in claim 1, wherein the machine is a clothes washing machine.

3. A method as claimed in any preceding claim, wherein the water-softening agent is water-insoluble.

4. A method as claimed in claim 3, wherein the water-softening agent is retained in the product throughout the method steps.

5. A method as claimed in either claim 3 or claim 4, wherein the water-softening agent is a cation exchange resin.

6. A method as claimed in any preceding claim, wherein the product changes shape or size.

7. A method as claimed in any claim from 1 to 6, wherein the product changes opacity.

8. A method of providing improved cleaning in a clothes washing machine, wherein a product containing a substantially water-insoluble water softening agent is located in the machine such that hard water flows through the product, thereby effecting the softening of the water in the machine **characterised in that** the product has a different appearance before being contacted with the hard water than after the product is contacted with the hard water.

9. A method as claimed in any preceding claim wherein the product has an enclosing wall to retain the water-softening agent and the wall being permeable to the water and to components dissolved therein.

10. A water softening product having an enclosing wall and containing a water-softening agent able to bind calcium ions, the wall permeable to the water and to components dissolved therein, **characterised in that** the product has a different appearance after being contacted with the hard water than before the product is contacted with the hard water.
